Europäisches Patentamt

European Patent Office

Office européen des brevets

(19)

(11) EP 0 996 073 A2

(12) **EUROPEAN PATENT APPLICATION**

(43) Date of publication:
26.04.2000 Bulletin 2000/17

(51) Int Cl.⁷: G06F 17/50

(21) Application number: 99121176.4

(22) Date of filing: 22.10.1999

(84) Designated Contracting States:
AT BE CH CY DE DK ES FI FR GB GR IE IT LI LU
MC NL PT SE
Designated Extension States:
AL LT LV MK RO SI

(30) Priority: 23.10.1998 JP 30219498

(71) Applicant: NEC CORPORATION
Tokyo (JP)

(72) Inventor: Arimitsu, Hitoshi
Minato-ku, Tokyo (JP)

(74) Representative: Betten & Resch
Reichenbachstrasse 19
80469 München (DE)

(54) **Method of static timing verification**

(57)    A STA tool (25) executes static timing verification of an LSI (11) having a first circuit block (12) and a second circuit block (13). The first circuit block (12) operates on an external clock signal (CLK1) and generates an internal clock signal (CLK2), whereas the second circuit block (12) operates on the internal clock signal (CLK2), and transfers data between the same and the first circuit block (12). The timing of an event occurring in the first circuit block (12) based on the external clock signal (CLK1) is converted into the timing in terms of the internal clock signal (CLK2), and compared against the timing of the data transfer from the second circuit block (12). The STA operates substantially without additional information after some clock information is supplied before starting operation.

FIG. 4

EP 0 996 073 A2

## Description

BACKGROUND OF THE INVENTION

(a) Field of the Invention

The present invention relates to a method of static timing verification for statically verifying the operational timing of a circuit in a LSI.

(b) Description of a Related Art

In a circuit design of a LSI, a dynamic verification and a static timing verification are known as methods for verifying the operational timing of the circuit blocks in the LSI. In the dynamic verification, the logical function of the circuit is verified together with the operational timing of the network of the circuit by using a connection information (netlist) of the circuit and input and output test patterns. The input test patterns are actually supplied to the inputs of the circuit to measure the output potentials of the network and compare the same against the output test patterns.

In the static timing verification, the clock constraints of an internal clock signal supplied through a internal clock output pin of a circuit block as well as the delay constraints of the internal clock signal with respect to the input external clock signal are defined manually, before statically verifying that the operational timings of the circuit network are within the constraints.

In the static timing verification, a tool for verifying the static timing (STA tool) is generally used. For instance, if a LSI having a first circuit block operating on an external clock signal and a second circuit block operating on an internal clock signal having a specific timing difference with respect to the external clock signal is to be verified, data transmission is analyzed between the first circuit block and the second circuit block, based on the netlist of the circuit between both the circuit blocks, information for the propagation delay of signals in the circuit, timing information in relation to the hold time and the set-up time, clock information, input data and output data, thereby judging whether or not a normal operation can be obtained in the circuit.

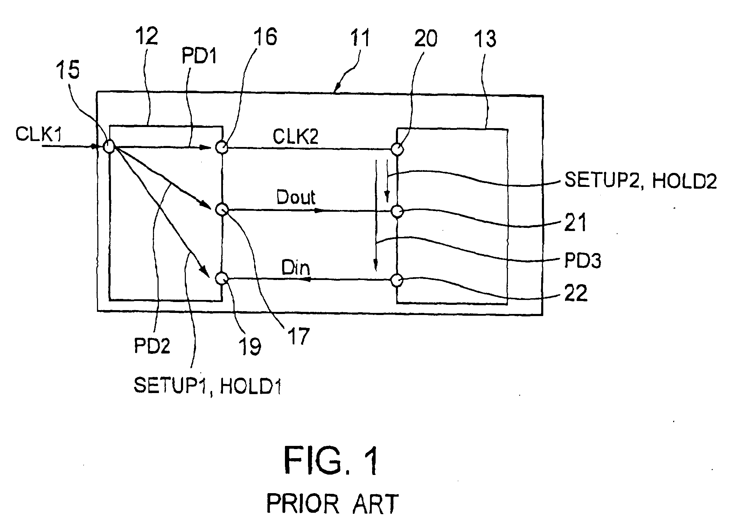

Fig. 1 shows a LSI to be subjected to the static timing verification by a STA tool as described above. The LSI 11 includes a first circuit block 12 operating on an external clock signal (CLK1), and a second circuit block 13 operating on an internal clock signal (CLK2) and transferring data between the same and the first circuit block 12. The first circuit block 12 includes an external clock input pin 15 for receiving CLK1, an internal clock output pin 16 for supplying CLK2 generated in the first circuit block 12, a first data output pin 17 and a first data input pin 19. The second circuit block 13 includes an internal clock input pin 20 for receiving CLK2, a second data input pin 21, and a second data output pin 22. The internal clock signal CLK2 is generated by multiplication of CLK1, for example, whereby CLK2 has a phase difference within a small range from the phase of the external clock signal CLK1 and thus is not completely in synchrony with CLK1, which case is referred to as an "incomplete synchrony" hereinafter.

In Fig. 1, there are shown three delays including a first I/O path delay PD1 occurring from the external clock input pin 15 to the internal clock output pin 16, a second I/O path delay PD2 occurring from the external clock input pin 15 to the first data output pin 17, and a third I/O path delay PD3 occurring from the internal clock input pin 20 to the second data output pin 22. There are also shown output data Dout supplied from the first data output pin 17 to the second data input pin 21, input data Din supplied from the second data output pin 22 to the first data input pin 19, a combination of first set-up time "setup1" and first hold time "hold1" from the first clock input 15 to the first data input 19 in the first circuit block 12, and a combination of a second set-up time "setup2" and a second hold time "hold2" from the internal clock input pin 20 to the second data input pin 21.

The term "set-up time" as used herein means a time lag from the time instant at which the input data is effective at a specified node (or pin) to the time instant at which the clock signal latching the input data at the specified node rises (or falls) for latching, whereas the tem "hold time" as used herein means a time length from the time instant at which the clock pulse for latching the latched data rises (or falls) to the time instant at which the latched data becomes ineffective.

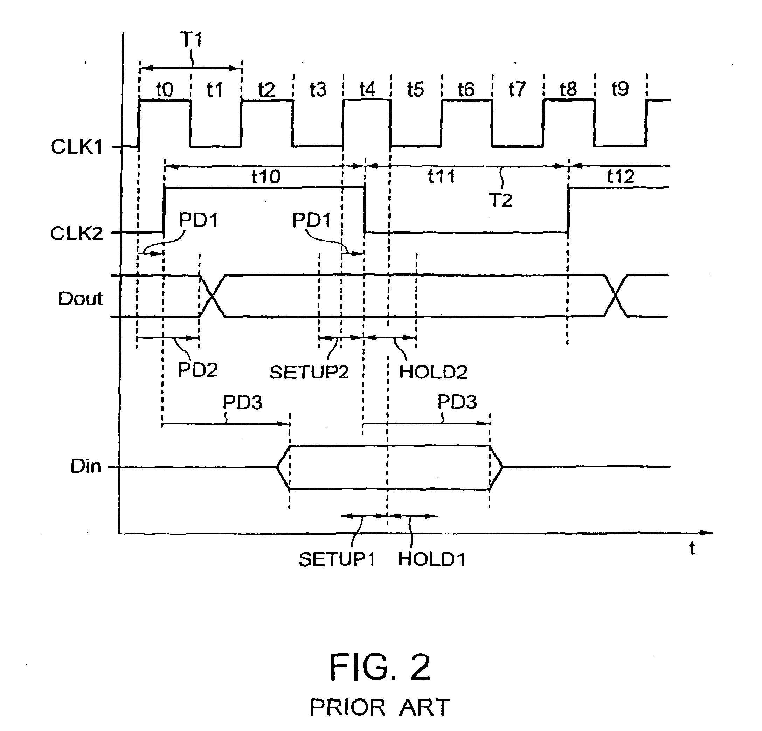

Fig. 2 is a timing chart for the signals in the LSI of Fig. 1. The external clock signal CLK1 has a period T1 which includes a first duration t0, t2, · · · of a high level of the clock pulse and a second duration t1, t3, · · · of a low level of the clock pulse. The first circuit block delivers output data Dout at the rising edge of the clock pulse of CLK1 and receives input data Din at the falling edge of the clock pluse of CLK1. The internal clock signal CLK2 has a period T2 which corresponds to four clock pulses of CLK1, namely $T2=T1 \times 4$, and includes a first duration t10, t12, · · · of a high level of the clock pulse and a second duration t11, · · · of a low level of the clock pulse. CLK 2 lags in phase with respect to CLK1 by a time length corresponding to the first I/O path delay PD1.

It is shown that output data Dout lags with respect to the rising edge of clock pulse of CLK1 at t0 by the second I/O path delay PD2, and that the second circuit block latches and releases output data Dout at the falling edge of the clock pulse at t10, with a set-up time setup2 and a hold time hold2. It is also shown that input data Din lags with respect to the rising edge of CLK2 by the third I/O path length PD3, and that input data Din is latched by the first circuit block 12 at the falling edge of clock pulse at t4, with a set-up time setup1 and a hold time hold1.

During verification of the static timing for the circuit 11 by using the conventional technique as described above, since the clock information defined for CLK1 is not delivered to the second circuit block operating on CLK2, additional clock constraints should be imposed upon the second circuit block or CLK2 This clock constraints should be considered in the case of the incomplete synchrony between CLK1 and CLK2, and not in the case of asynchrony therebetween.

Thus, in the conventional static timing verification, the clock constraints for the internal clock signal CLK2 are manually prepared beforehand and supplied to the STA tool. In addition, since the calculation of delay of CLK2 with respect to CLK1 requires information which can obtained after the layout design of the circuit elements, the clock constraints must be prepared in each modification of the layout design of the LSI. This involves complicated manual design of commands for satisfying the clock constraints.

SUMMARY OF THE INVENTION

It is an object of the present invention to provide a method for static timing verification which is capable of substantially automated verification by the STA tool by providing thereto specified simple data for verification.

The present invention is directed to a method for verifying static timing of a circuit having a first circuit block operating on a first clock signal and a second circuit block operating on a second clock signal which is in incomplete synchrony with the first clock signal.

The method includes the steps of: defining an event of first data occurring based on the first clock signal in the first circuit block by using a clock time defined by the second clock signal, the first data being transferred between the first circuit block and the second circuit block; and verifying static timing of the event by comparing the clock time of the event against a timing of data transfer of the first data by the second circuit block.

In accordance with a method according to a preferred embodiment of the present invention, constraint commands, which are designed to convert the clock of an event defined by the first clock signal into the clock time, for example, the time length elapsed from the reference time instant of the second clock signal, are supplied to the STA tool before verification by the STA tool, instead of manually providing the delay information during verification. Thus the STA tool can automatically perform a static timing verification substantially without any additional information or commands.

The above and other objects, features and advantages of the present invention will be more apparent from the following description, referring to the accompanying drawings.

BRIEF DESCRIPTION OF THE DRAWINGS

Fig. 1 is a block diagram of a LSI subjected to a conventional static timing verification.

Fig. 2 is a timing chart of signal transmission in the LSI of Fig, 1.

Fig. 3 is an exemplified block diagram of a STA tool executing static timing verification according to the present invention.

Fig. 4 is a block diagram of a LSI subjected to static timing verification according to a first embodiment of the present invention.

Fig. 5 is a timing chart of signal transmission in the LSI of Fig. 4.

Fig. 6 is a flowchart of the signal processing using the static timing verification according to the present invention.

Fig. 7 is a detail of the flowchart of Fig. 6.

Fig. 8 is a partial block diagram of a LSI subjected to static timing verification according to a second embodiment of the present invention.

Fig. 9 is a timing chart of the signal transmission in the LSI of Fig. 8

Fig. 10 is a partial block diagram of a LSI subjected to static timing verification according to a third embodiment of the present invention.

Fig. 11 is a timing chart of the signal transmittion in the LSI of Fig. 10.

PREFERRED EMBODIMENTS OF THE INVENTION

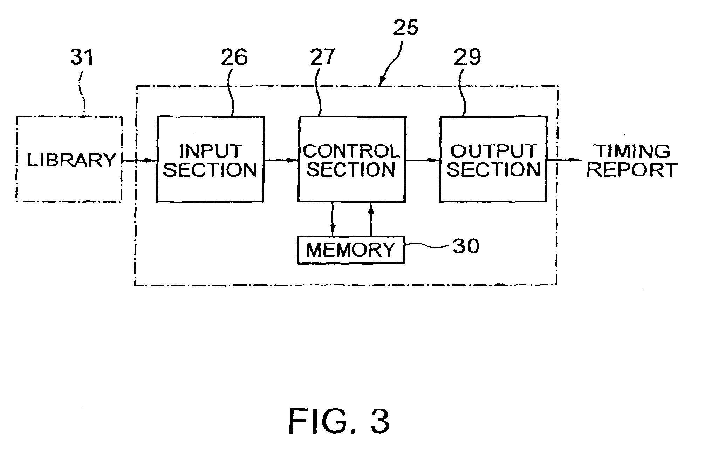

Referring to Fig. 3, a STA (static timing analysis) tool for use in a method for static timing verification according to the present invention includes an input section 26, a control section 27, an output section 29 and a memory 30. The input section 26 receives library information 31, such as the constraint information of the circuit to be verified, from a library (data base) not shown. The control section 27 receives the library information through the input section 26 examines the data transfer between the circuit blocks at a specified timing. The control section 27 verifies whether or not data transfer between the first circuit block and the second circuit block can be conducted at a normal timing. The output section 29 delivers, to outside the STA tool, the results of verification as to whether or not data transfer between the first circuit block and the second circuit block is normal or whether the verification itself is possible.

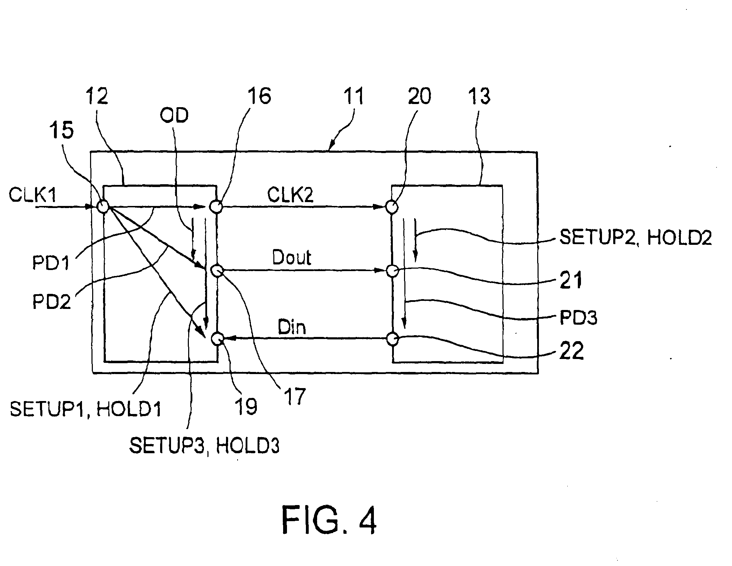

Referring to Fig. 4 showing a LSI to be subjected to a static timing verification according to a first embodiment of the present invention, there are shown, in addition to I/O path delays PD1, PD2 and PD3, set-up times setup1 and setup2 and hold times hold1 and hold 2 similar to those shown in Fig. 1, an output delay OD from the specified clock pulse of the internal clock signal CLK2 on the internal clock output pin 16 to output data Dout on the first data output pin 17, and a combination of third set-up time setup3 and third hold time hold3 for the input data to be latched and released, respectively, at the rising edge of clock pulse of CLK2. The first set-up time setup1 and the first hold time hold1 are stored in the library as library information.

CLK2 is generated in the first circuit block 12 based on CLK1 by multiplication, division or masking thereof, whereby CLK2 is in incomplete synchrony with CLK1.

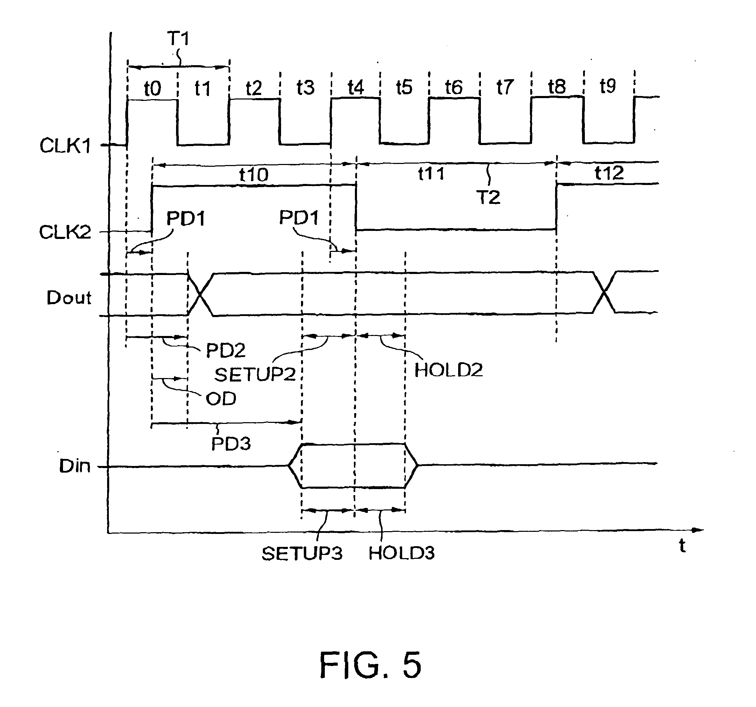

Referring to Fig. 5 showing a timing chart similarly to Fig. 2, CLK2 has a duration T2 which is four times duration T1 of CLK1, and lags in phase with respect to CLK1 by the first I/O path delay PD1. Output data Dout is latched at a rising edge of CLK1 at the first output pin 17 and delivered therefrom. Output data Dout is received by the second circuit block at a rising edge of CLK2, whereas input data Din is delivered from the second circuit block 13 at a rising edge of CLK2.

In Fig. 5, output data Dout lags with respect to the rising edge of clock pulse at t0 of CLK1 by the second I/O path delay PD2, and lags with respect to the rising edge of clock pulse at t10 of CLK2 by the output delay OD. Input data Din lags with respect to the rising edge of clock pulse at t10 of CLK2 by the third I/O path delay PD3.

The second set-up time setup2 and the second hold time hold2 with which input data Din is latched and released by the second circuit block at the rising edge of CLK2 are shown in the figure. In addition, the third set-up time setup3 and the third hold time hold3 are shown instead of setup1 and hold1, with which input data Din is latched and released by the first circuit block at the rising edge of CLK 1. The output delay OD is defined with respect to CLK1 whereas the third set-up time setup3 and the third hold time hold3 are defined with respect to CLK2.

By defining the event of output data Dout and input data Din occurring based on CLK1, as described above, by using the output delay OD and the third I/O path delay PD3 with respect to CLK2, the timing verification of the events can be automatically conducted by the STA tool substantially without providing additional delay information to the STA tool.

The static timing can be automatically verified in the present embodiment by the STA tool 25, by examining whether the following conditions satisfy:

(1) the sum of the output delay OD and the propagation delay (T1D) of output data Dout from the first circuit block 12 to the second circuit bock 13 is smaller than T2 - setup2 or T2/2 - setup2;

(2) the sum of the output delay OD and the propagation delay (T1D) of output data Dout from the first circuit block 12 to the second circuit block is larger than hold2 or T2/2 + hold2;

(3) the sum of the third I/O path delay PD3 and the propagation delay (T2D) of input data Din from the second circuit block 13 to the first circuit block 12 is smaller than T2 - setup 3 or T2/2 - setup3; and

(4) the sum of the third I/O path delay PD3 and the propagation delay (T2D) of input data Din from the second circuit block 13 to the first circuit block 12 is larger than T2 + hold3 or T2/2 + hold3.

In the above conditions, T2 and hold2 are employed if the event is defined from the rising edge of CLK2, whereas T2/2 and T2/2+hold2 are employed if the event is defined from the falling edge of CLK2.

In the above conditions (1) to (4), the second set-up time setup2 and the second hold time hold2 are minimums of set-up times and hold times, respectively, which provide a normal operation of the circuit. It is necessary that the STA tool examine and verify the above conditions (1) to (4), and it is concluded that the circuit operates normally if all the conditions (1) to (4) satisfy. The information in the above conditions includes constraint information and library information as described below.

The constraint information includes period T1 of CLK1, period T2 of CLK2, frequency ratio $\alpha$ =T2/T1, delay factor $\beta$, output delay OD, third set-up time setup3, and third hold time hold3. The delay factor $\beta$ is used in equation T3 = T1 $\times$ $\beta$, for specifying the number of clock pulses of CLK1 inserted between the reference time instant and the clock pulse for latching the data.

The library information to be retrieved from the constraint library includes first set-up time setup1, first hold time hold1, second set-up time setup2, second hold time hold2, first I/O path delay PD1, second I/O path delay PD2 and third I/O path delay PD3.

The constraint information can be generated by recitation of inherent constraint commands executed by the STA tool 25, and can be calculated based on the following equations:

$$OD=PD2-PD1+(\alpha \times T1)$$

$$setup3 = setup1-PD1+(\alpha \times T1)$$

$$hold3 = hold1+PD1+(\alpha \times T1)$$

wherein the frequency ratio $\alpha$ and the period T1 are constants determined by the logical structure of the circuit and the external clock signal CLK1, and the first set-up time setup1 and the first hold time hold1 are retrieved from the constraint library.

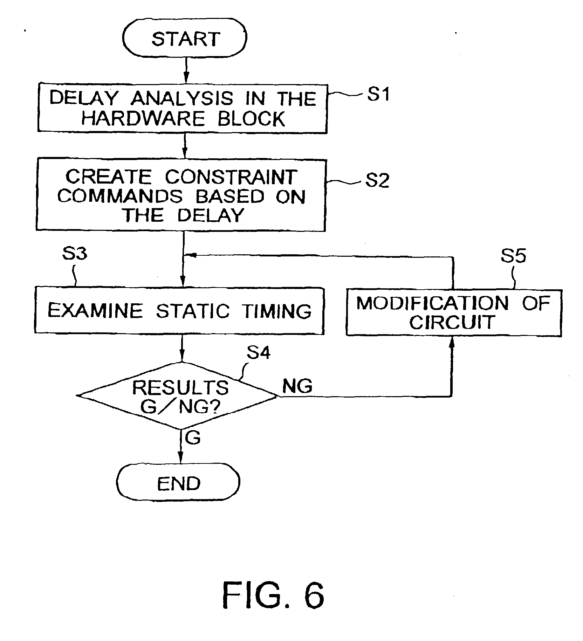

Referring to Fig. 6 showing a flowchart of the method of static timing verification executed by using the STA tool shown in Fig. 3. In step S1, delay of the first circuit block (hard macro block) 12 is analyzed, followed by creating constraint commands in step S2 instead of supplying delay information of events with respect to CLK2.

Thereafter, static timing is analyzed in step 3, whereby the timing relationship between the event of data and the clock signal is analyzed. In step S4, the results obtained by the analysis are judged as to whether or not the circuit operates in a normal state. If there is any malfunction, the circuit structure is modified to remove the malfunction in step S5, followed by iterative analysis of the static timing in the resultant circuit structure in step S3. If it is judged in step S4 that the results by the analysis provide normal operation of the circuit, the procedure is finished.

The modification in step S5 may include insertion of a delay gate or delay buffer between the first circuit block 12 and the second circuit block 13 for effecting increase of time delay, or replacement of a buffer having a low operational speed by another buffer having a higher operational speed for effecting decrease of propagation delay. The replacement is automatically conducted by the STA tool.

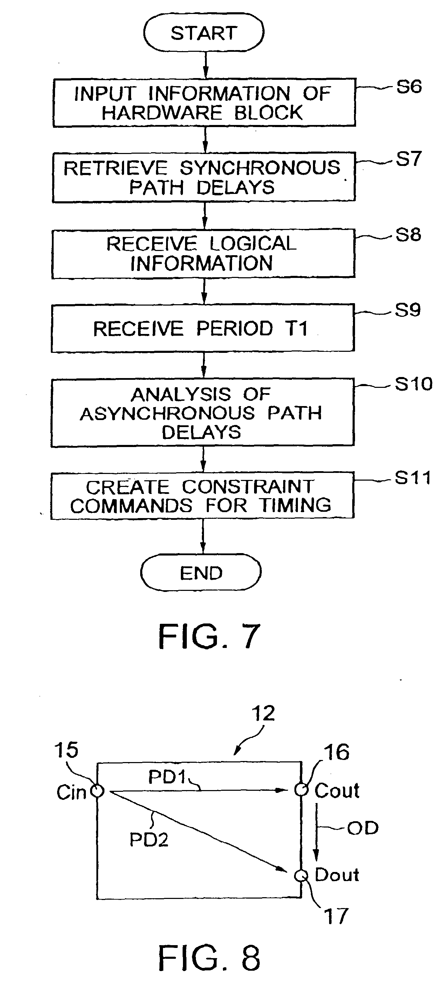

Referring to Fig. 7 showing the detail of steps S1 and S2 of Fig. 6, the steps are arranged in the order of processing from data input to the creation of the constraint commands. Steps S6 and S7 correspond to step S1 of Fig. 6, and steps S8 to S11 correspond to step S2 of Fig. 6.

In step S6, the operator manually provides information to the STA tool before operation thereof, with reference to the locational information of the first circuit block, as to which delay information between pins is to be obtained by the STA tool.

In step S7, the STA tool 25 retrieves, based on the above information, the first set-up time setup1, the first hold time hold1, the first I/O path delay PD1 and the second I/O path delay PD2 from the library, thereby analyzing these retrieved data to obtain the third I/O path delay PD3 as a synchronous path delay.

In step S8, the STA tool receives logical information of the first circuit block 12 including the period T2 of CLK2 and the frequency ratio $\alpha$. In step S9, the STA tool also receives the period T1 of CLK1 in the first circuit block.

In step S10, the STA tool 25 analyzes the output delay OD as an asynchronous path delay by calculating constraint information including the delay factor $\beta$, the third set-up time setup3 and the third hold time hold3.

In step S11, the STA tool 25 creates the constraint commands based on the constraint information including the period T2 of CLK2, the third set-up time setup3, the third hold time hold3 as well as the output delay OD obtained in step S10.

Then, the STA tool executes the static timing verification shown in Fig. 6 based on the constraint commands as obtained in step S11.

In summary of the procedure, the following steps:

(1) the operator manually defines the period T2 of CLK2 which constitutes one of constraint information;

(2) the STA retrieves library information including the first I/O path delay PD1, the secnd I/O path delay PD2, the first set-up time setup1, and the first hold time hold1 from the library;

(3) the STA tool calculates constraint information including the frequency ratio $\alpha$, the delay factor $\beta$, the third set-up time setup3 and the third hold time hold3, and calculates the output delay OD based on the constraint information;

(4) the STA tool creates constraint commands based on the constraint information including the period T2 of CLK2, the third set-up time setup3, and the third hold time hold3 as well as the output delay OD obtained in step (3); and

(5) the STA tool verifies the static timing based on the constraint commands obtained in step (4) are executed for static timing verification.

Steps (2) to (5) are automated processing by the STA tool, which can be conducted after manually providing some information in step (1).

In the above embodiment, the events executed based on CLK1 are expressed by the time length elapsed from a specified time instant defined by CLK2, whereby the events executed based on CLK1 can be expressed in terms of CLK2. Thus, the static timing verification can be conducted by automated processing without further delay information.

Referring to Fig. 8 showing a configuration of the first circuit block 12 to be subjected to a static timing verification according a second embodiment of the present invention, the first circuit block 12 receives the external clock signal CLK1 through the external clock pin 15, and delivers the internal clock signal CLK2 through the internal clock output pin 16 and data, which may be latched from outside the circuit in synchrony with CLK1, in synchrony with CLK1 through the data output pin 17 as output data Dout. CLK2 has a phase delay with respect to CLK1 corresponding to the first I/O path delay PD1, whereas output data Dout has a phase delay corresponding to the second I/O path delay PD2 with respect to CLK1. The phase delay of output data also corresponds to the third I/O path delay PD3 with respect to CLK2.

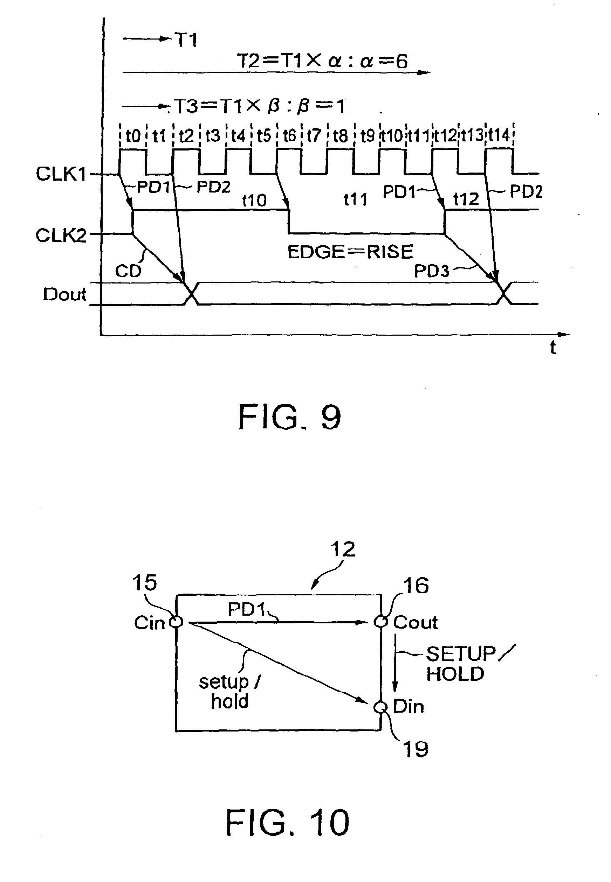

Referring to Fig 9, there are shown clock signals CLK1 and CLK2 and output data Dout delivered from the first circuit block 12. CLK1 has a period T1 whereas CLK2 has a period T2 which is equal to $T1 \times \alpha$. In this example, $\alpha$ is six. It is shown that CLK2 has a phase delay equal to the first I/O path delay PD1 with respect to CLK1, and output data Dout has a phase delay equal to the second I/O path delay PD2 with respect to CLK1, which corresponds to the output delay OD with respect to CLK2. The output delay OD can be obtained as follows.

First, information is delivered to the STA tool, in step S6 of Fig. 7, to obtain the locational information including propagation delays among the external clock pin 15, the internal clock output pin 16 and the first data output pin.

Subsequently, the STA tool analyzes the synchronous path delay including the first I/O path delay PD1, and the second I/O path delay PD2 in step S7 of Fig. 7.

Thereafter, in step S8, the STA tool is supplied with the logical information including the period T2 of CLK2, frequency ratio $\alpha$, delay factor $\beta$, and the latch edge (rising edge) of CLK2 for latching the data, which are generally determined by the logical structure of the first circuit block. In step S9, the period T1 of CLK1 is also input to the STA tool.

In step S10, the asynchronous path delay or output delay OD is calculated based on the period T2 of CLK2, the logical delay T3 from the internal clock output pin 16 to the first data output pin 17 by using the following equations:

$$T2=T1\times\alpha$$

$$T3=T1\times\beta$$

$$OD=PD2\text{-}PD1+T3=PD2\text{-}PD1+T1\times\beta$$

In the present embodiment, the frequency ratio $\alpha$ is set at 6 and the delay factor $\beta$ is set at 1. The delay factor $\beta$ may be n/2 wherein n is an integer. If data are latched at the falling edge, $\beta$ may be 1/2.

Thereafter, in step S11, the STA tool creates constraint commands for obtaining delay information based on instruction provided beforehand. In an exemplified configuration, the STA tool is implemented by a synopsys design compiler, wherein the constraint commands for timing verification are as follows:

[constraint commands]

"create_clock terminal name -name output clock -period period=T2

terminal name=Cout

set_input_delay OD terminal name -clock output clock [-clock_fall]"

In these constraint commands, it is defined that output clock supplied through terminal Cout has a period T2, output data Dout has a delay OD with respect to the output clock. The portion "[-clock_fall]" is such that data are to be latched at the falling edge of the output cock signal. The portion may be replaced by "[-clock_rise]" which means that data are to be latched at the rising edge of the clock signal.

The frequency ratio $\alpha$ and the delay factor $\beta$ are fixed constants which are determined by the structure of the first circuit block, whereas the first and second I/O path delays PD1 and PD2 vary depending on the locations of the pins and are constants in a specified configuration of the first circuit block 12.

More specifically, the internal clock output pin Cout and the first data output pin Dout are delivered as fixed names, and the period T2 and the third I/O path delay PD3 are delivered as variables, wherein the period T2 is expressed by T1 $\times$ $\alpha$ with $\alpha$ being a constant. Thus, by providing the period T1 of CLK1, the results of the analysis of the first circuit block 12 can be substituted by the constraint commands created by the STA tool for conducting the static timing verification.

The output delay OD is expressed by:

$$OD=PD2\text{-}PD1+T3,$$

wherein the logical delay T3 is expressed by:

$$T3=T1\times\beta.$$

Accordingly, if the period T1 of CLK1, the first I/O path delay PD1, the second I/O path delay PD2 are fixed, the constraint commands can be fixed. Since the first and the second I/O path delays PD1 and PD2 are retrieved from the library by the STA tool, the constraint commands to be input to the STA tool is determined by providing the period T1.

In the present embodiment, the STA tool analyzes the conditions (1) to (4) as described above, thereby delivering a timing report that reports whether or not the circuit operates in a normal state or that the STA tool cannot verify the static timing of the circuit.

Referring to Fig. 10 showing another configuration of the first circuit block subjected to a static timing verification according a third embodiment of the present invention, the first circuit block 12 receives the external clock signal CLK1 through the external clock pin 15, delivers the internal clock signal CLK2 through the internal clock output pin 16, and receives input data Din in synchrony with CLK1 through the first data input pin 19 from the second circuit block (not shown) operating on CLK2. CLK2 has a phase delay corresponding to the first I/O path delay PD1, whereas data Din is latched at the falling edge of CLK1 with a set-up time "setup" and hold time "hold". The set-up time and the hold time with respect to CLK1 can be re-defined as another set-up time "SETUP" and a hold time "HOLD" defined with respect to CLK2 in the present embodiment.

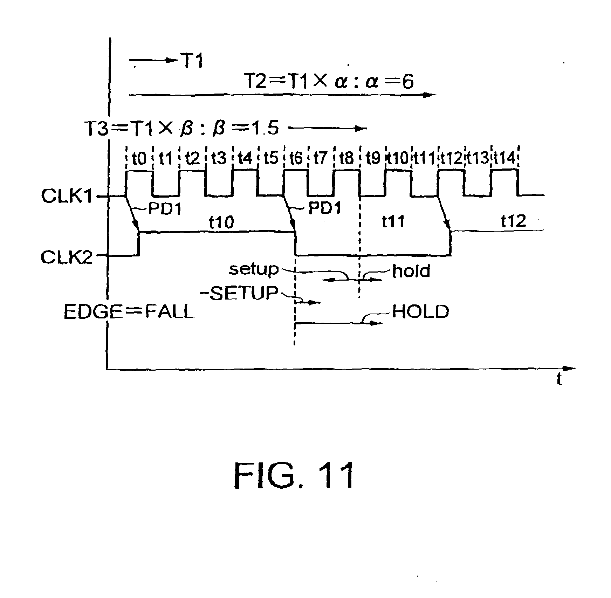

Referring to Fig. 11, there are shown clock signals CLK1 and CLK2 in the first circuit block 12. CLK1 has a period T1 whereas CLK2 has a period T2 which is equal to T1$\times\alpha$, where $\alpha$=6, for example. It is shown that CLK2 has the first I/O path delay PD1 with respect to CLK1. Input data Din is latched by the falling edge of clock pulse at t8 of CLK1, with a set-up time "setup" and a hold time "hold". The set-up time and the hold time with respect to CLK1 are converted into another set-up time SETUP and a hold time HOLD, respectively, with respect to CLK2.

More specifically, SETUP and HOLD are calculated by the following equations:

$$T2 = T1 \times \alpha$$

$$T3 = T1 \times \beta$$

$$SETUP = setup + PD1 - T3$$

$$HOLD = hold - PD1 + T3$$

In the exemplified case, $\alpha = 6$ and $\beta = 1.5$, and SETUP obtained by the above equation assumes minus value.

The constraint commands input to and to be created by the STA tool is as follows:
[constraint commands]
"create_clock terminal name -name output clock period period=T2
terminal name=Dout
set_output_delay delay value terminal name -clock [-clock_fall]
delay value = +SETUP, -HOLD
terminal name = Dout"

In the above commands, "[-clock_fall]" means that the data is latched at the falling edge of CLK2, and the name of output clock can be any desired name. By providing the constrain commands as described above to the STA tool instead of delay information, the STA tool examines for a static timing verification between the first circuit block and the second circuit block substantially without any additional information during static timing verification.

Since the above embodiments are described only for examples, the present invention is not limited to the above embodiments and various modifications or alterations can be easily made therefrom by those skilled in the art without departing from the scope of the present invention.

**Claims**

1. A method for verifying static timing of a circuit having a first circuit block (12) operating on a first clock signal (CLK1) and a second circuit block (13) operating on a second clock signal (CLK2) which is in incomplete synchrony with said first clock signal (CLK1), said method comprising the steps of:

defining an event of first data occurring based on said first clock signal (CLK1) in said first circuit block (12) by using a clock time defined by said second clock signal (CLK2), said first data being transferred between said first circuit block (12) and said second circuit block (12); and
verifying static timing of said event by comparing said clock time against a timing of data transfer of said first data by said second circuit block (13).

2. The method as defined in claim 1, wherein said verifying step examines whether or not the following relationships hold:

$$OD + T1D < T2 - setup2 \text{ or } t2/2 - setup2;$$

and

$$OD + T1D > hold2 \text{ or } T2/2 + hold2$$

wherein OD and T1D, which are defined as said clock times, are an output delay of said first data and a propagation delay of said first data during transferring from said first circuit block (12) to said second circuit block (13), respectively, and wherein T2, setup2 and hold2 are a period of said second clock signal (CLK2), set-up time of said second circuit block (12) and hold time of said second circuit block (12), respectively.

3. The method as defined in claim 2, wherein said verifying step further examines whether or not the following relationships hold:

$$PD3 + T2D < T2 - setup3 \text{ or } t2/2 - setup3;$$

and

$$PD3 + T2D > T2 + hold3 \text{ or } T2/2 + hold3$$

wherein PD3 and T2D, which are defined as said clock times, are an I/O path delay of a second data transferred from said second circuit block (13) to said first circuit block (12) with respect to said second clock signal (CLK2) and a propagation delay of said second data during transferring from said second circuit block (13) to said first circuit block (12), respectively, and wherein setup3 and hold3 are a set-up time and hold time, respectively, of said first circuit block (12) with respect to said second clock signal (CLK2).

4. The method as defined in one of claims 1 to 3, wherein said verifying step includes creating commands for obtaining delay information.

5. The method as defined in one of claims 1 to 4, wherein said verifying step comprises the step of modifying a signal line between said first circuit block (12) and said second circuit block (13) if said comparing finds a timing malfunction.

6. The method as defined in claim 5, wherein said modifying step comprises the step of insertion of a delay gate or replacement of an output buffer.

FIG. 1
PRIOR ART

# FIG. 2
## PRIOR ART

FIG. 3

FIG. 4

EP 0 996 073 A2

FIG. 5

START

DELAY ANALYSIS IN THE HARDWARE BLOCK — S1

CREATE CONSTRAINT COMMANDS BASED ON THE DELAY — S2

S3

EXAMINE STATIC TIMING

S5

MODIFICATION OF CIRCUIT

S4

RESULTS G/NG?

NG

G

END

FIG. 6

```
          ┌─────────────┐
          │    START    │
          └─────────────┘
                 │
                 ▼
   ┌──────────────────────────┐
   │   INPUT  INFORMATION  OF │────  S6
   │     HARDWARE  BLOCK      │
   └──────────────────────────┘
                 │
                 ▼
   ┌──────────────────────────┐
   │  RETRIEVE  SYNCHRONOUS   │────  S7
   │      PATH  DELAYS        │
   └──────────────────────────┘
                 │
                 ▼
   ┌──────────────────────────┐
   │   RECEIVE  LOGICAL       │────  S8
   │      INFORMATION         │
   └──────────────────────────┘
                 │
                 ▼
   ┌──────────────────────────┐
   │   RECEIVE  PERIOD  T1    │────  S9
   │                          │
   └──────────────────────────┘
                 │
                 ▼
   ┌──────────────────────────┐
   │      ANALYSIS  OF        │────  S10
   │  ASYNCHRONOUS  PATH      │
   │        DELAYS            │
   └──────────────────────────┘
                 │
                 ▼
   ┌──────────────────────────┐
   │  CREATE  CONSTRAINT      │────  S11
   │  COMMANDS  FOR  TIMING   │
   └──────────────────────────┘
                 │
                 ▼
          ┌─────────────┐
          │     END     │
          └─────────────┘
```

## FIG. 7

## FIG. 8

FIG. 9

FIG. 10

FIG. 11